# EUROPEAN PATENT APPLICATION

(11) **EP 4 389 540 A1**
(43) Date of publication of application: **26.06.2024**
(21) Application number: 22857439.8
(22) Date of filing: 29.06.2022
(51) Int. Cl.: B60R 25/20, E05F 15/73

(54) **CONTROL METHOD FOR BACK DOOR OF VEHICLE, CONTROL APPARATUS FOR BACK DOOR OF VEHICLE, AND VEHICLE**

(30) Priority: 16.08.2021 CN 202110934575
(71) Applicant: Great Wall Motor Company Limited, Hebei 071000 (CN)
(72) Inventor: ZHAO, Chenhui, Baoding, Hebei 071000 (CN)
(74) Representative: Klunker IP Patentanwälte PartG mbB
(86) International application number: PCT/CN2022/102273
(87) International publication number: WO 2023/020126

(57) **Abstract**

A control method and a control device for a tailgate of a vehicle, and a vehicle, and the control method includes: detecting whether a distance between a user and the tailgate reaches a preset distance range value; authenticating a key carried by the user to determine whether the key matches the vehicle; if the key matches the vehicle, controlling a projection light to project a first step area; detecting whether the user is located in the first step area, and detecting whether the tailgate is in a closed state or an opened state; controlling the vehicle to open the tailgate if the user is located in the first step area and the tailgate is in the closed state; controlling the vehicle to close the tailgate if the user is located in the first step area and the tailgate is in the opened state.

## Description

### CROSS REFERENCE TO RELATED APPLICATION

The present application claims priority of Chinese Patent Application of GREAT WALL MOTOR COMPANY LIMITED, with Application No.202110934575.0, filed on August 16, 2021, entitled "control method and control device for tailgate of vehicle, and vehicle".

### TECHNICAL FIELD

The present application relates to the field of vehicles, and more particularly to a control method for a tailgate of a vehicle, a control device for a tailgate of a vehicle, a vehicle, and a vehicle controller.

### BACKGROUND

In related technologies, there are two ways to control the tailgate of the vehicle to move. One way is to control the tailgate of the vehicle to move by pressing the switch button of the tailgate of the vehicle, and when the user is carrying items in his hand, this way of controlling the tailgate of the vehicle will lead to inconvenient operation for the user. Another way is to raise the foot under the tailgate of the vehicle to trigger the sensor to control the tailgate of the vehicle to move, and when the user is carrying heavy objects or the ground is icy, this way of controlling the tailgate of the vehicle may cause the user to slip, which may cause the user to fall.

### SUMMARY

In view of this, the present application aims to provide a control method for a tailgate of a vehicle, and the control method for the tailgate of the vehicle can conveniently open the tailgate of the vehicle and will not cause the user to fall, thus, the safety of opening the tailgate of the vehicle can be ensured.

In order to achieve above objects, the technical solutions adopted in the present application are as following:
A control method for a tailgate of a vehicle, which includes following steps:
detecting whether a distance between a user and the tailgate reaches a preset distance range value; authenticating a key carried by the user to determine whether the key matches the vehicle; if the key matches the vehicle, controlling a projection light to project a first step area; detecting whether the user is located in the first step area, and detecting whether the tailgate is in a closed state or an opened state; controlling the vehicle to open the tailgate if the user is located in the first step area and the tailgate is in the closed state; or controlling the vehicle to close the tailgate if the user is located in the first step area and the tailgate is in the opened state.

In some examples of the present application, the step of detecting whether the distance between the user and the tailgate reaches the preset distance range value includes:
after detecting that the user is located in the first step area, further detecting whether the user is in a sub-step area within the first step area.

In some examples of the present application, the step of detecting whether the distance between the user and the tailgate reaches the preset distance range value includes:
after detecting that the user is located in the first step area, further detecting a distance variation trend between the user and the tailgate.

In some examples of the present application, after the step of detecting that the user is located in the first step area, the method further includes:
controlling the projection light to flash for a predetermined time.

In some examples of the present application, during a movement of the tailgate, controlling the tailgate to stop moving or to move in a direction away from the user if the user is detected to be located within a movement path of the tailgate.

In some examples of the present application, further detecting motor working parameters of the tailgate during a closing process of the tailgate, and controlling the tailgate to stop moving or to move towards an opened position when the tailgate is determined to be clamped according to the motor working parameters.

Compared with the prior art, the method of controlling the tailgate of the vehicle described in the present application has the following advantages:
According to the method of controlling the tailgate of the vehicle in the present application, the user does not need to press the button to control the tailgate of the vehicle to move, so that the tailgate of the vehicle can be conveniently opened and closed, which will not cause the user to slip or fall, and the safety of opening and closing the tailgate of the vehicle can be ensure.

Another object of the present application is to provide a control device for a tailgate of a vehicle.

In order to achieve above objects, the technical solutions adopted in the present application are as following:
A control device for a tailgate of a vehicle, which includes: a first detection module, configured for detecting whether a distance between a user and the tailgate reaches a preset distance range value, and further configured for detecting whether the user is located in a first step area projected by a projection light; a determining module, configured for authenticating a key carried by the user to determine whether the key matches the vehicle; a second detection module, configured for detecting whether the tailgate is in a closed state or an opened state; and a control module, communicated with the first detection module, the second detection module and the determining module, and configured for controlling the projection light to project the first step area when the distance between the user and the tailgate reaches the preset distance range value and the key matches the vehicle, and controlling the vehicle to open the tailgate when the user is located in the first step area and the tailgate is in the closed state; or controlling the vehicle to close the tailgate if the user is located in the first step area and the tailgate is in the opened state.

In some examples of the present application, the first detection module is further configured for after detecting that the user is located in the first step area, further detecting whether the user is in a sub-step area within the first step area.

In some examples of the present application, the first detection module is further configured for after detecting that the user is located in the first step area, further detecting a distance variation trend between the user and the tailgate.

In some examples of the present application, after the first detection module detects that the user is located in the first step area, the control module is further configured for controlling to open or close the tailgate after the projection light is controlled to flash for a predetermined time.

In some examples of the present application, during a movement of the tailgate, the control module controls the tailgate to stop moving or to move in a direction away from the user if the first detection module detects that the user is located within a movement path of the tailgate.

In some examples of the present application, during a closing process of the tailgate, the second detection module further detects motor working parameters of the tailgate, the control module controls the tailgate to stop moving or to move towards an opened position when the tailgate is determined to be clamped according to the motor working parameters.

Compared with the prior art, the control device for the tailgate of the vehicle described in the present application has the following advantages:
According to the control device for the tailgate of the vehicle in the present application, the user does not need to press the button to control the tailgate of the vehicle to move, so that the tailgate of the vehicle can be conveniently opened and closed, which will not cause the user to slip or fall, and the safety of opening and closing the tailgate of the vehicle can be ensure.

Another object of the present application is to provide a vehicle.

In order to achieve above objects, the technical solutions adopted in the present application are as following:
A vehicle, including a vehicle controller configured for executing steps of the control method for the tailgate of the vehicle mentioned above.

The vehicle has same advantages as that of the control method for the tailgate of the vehicle over the prior art, which will not be repeated herein.

Another object of the present application is to provide a computer-readable storage medium.

In order to achieve above objects, the technical solutions adopted in the present application are as following:
A computer-readable storage medium storing with a control program for a tailgate of a vehicle, and when the control program for the tailgate of the vehicle is executed by a processor to realize the control method for the tailgate of the vehicle mentioned above.

According to the computer-readable storage medium in the present application, when the control program for the tailgate of the vehicle is executed by a processor, the user does not need to press the button to control the tailgate of the vehicle to move, so that the tailgate of the vehicle can be conveniently opened and closed, which will not cause the user to slip or fall, and the safety of opening and closing the tailgate of the vehicle can be ensure.

Another object of the present application is to provide a vehicle controller.

In order to achieve above objects, the technical solutions adopted in the present application are as following:
A vehicle controller, including: a memory, a processor, and a control program of a tailgate of vehicle stored on the memory and running on the processor; and when the control program for the tailgate of the vehicle is executed by a processor to realize the control method for the tailgate of the vehicle mentioned above.

According to the vehicle controller in the present application, when the control program for the tailgate of the vehicle is executed by a processor, the user does not need to press the button to control the tailgate of the vehicle to move, so that the tailgate of the vehicle can be conveniently opened and closed, which will not cause the user to slip or fall, and the safety of opening and closing the tailgate of the vehicle can be ensure.

Additional aspects and advantages of the present application will be given in part in the description below, and in part will become apparent from the description below, or become known through the practice of the present application.

### BRIEF DESCRIPTION OF THE DRAWINGS

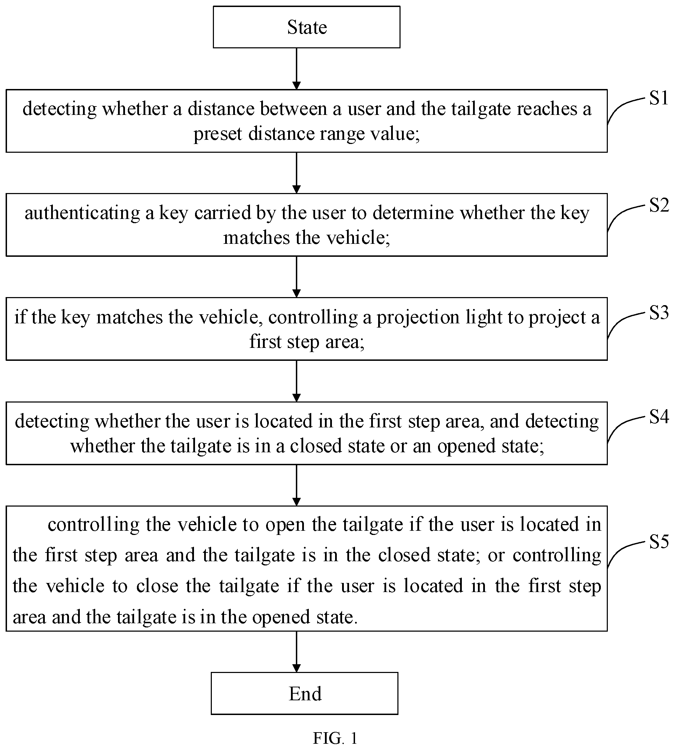

FIG. 1 is a flowchart of a control method for a tailgate of a vehicle provided in an embodiment of the present application; and
FIG. 1 is block diagram of a control device for a tailgate of a vehicle provided in an embodiment of the present application.

### DETAILED DESCRIPTION OF EMBODIMENTS

It should be noted that the embodiments in the present application and the features in the embodiments may be combined with each other, provided that there is no conflict.

The present application is described in detail below with reference to the attached drawings and in conjunction with embodiments.

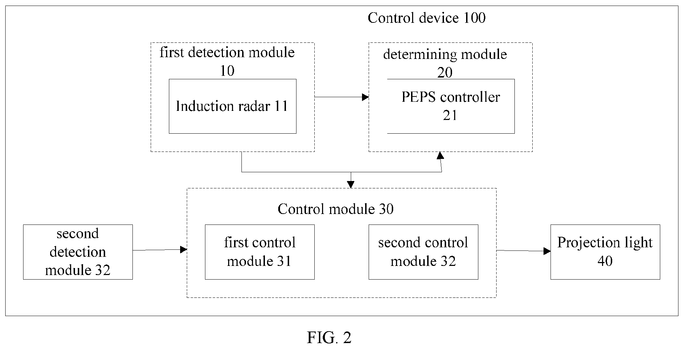

As shown in FIG. 2, the device 100 for controlling a tailgate of a vehicle according to the embodiment of the present application includes a first detection module 10, a determining module 20, a second detection module and a control module 30.

The first detection module 10 is configured for detecting whether the distance between the user and the tailgate reaches the preset distance range value, and the first detection module 10 is further configured for detecting whether the user is located in the first step area projected by a projection light 40. The determining module 20 is configured for authenticating the key carried by the user to determine whether the key matches the vehicle. The second detection module 50 is configured for detecting whether the tailgate is in a closed state or an opened state.

The control module 30 is configured for controlling the projection light 40 to project the first step area, and the control module 30 is communicated with the first detection module 10, the second detection module 50 and the determining module 20. The control module 30 is configured for controlling the tailgate of the vehicle to move according to the information sent by the first detection module 10, the second detection module 50 and the determining module 20.

It should be noted that the first detection module 10 can be arranged at the tailgate. In other embodiments, the first detection module 10 can be arranged on a rear bumper of the vehicle. The first detection module 10 can detect the distance between the user and the tailgate. In addition, the first detection module 10 can also detect whether the user is located in the first step area projected by the projection light 40.

The determining module 20 can authenticate the key carried by the user, in which the key can be the key of the vehicle, and the determining module 20 can determine whether the key matches the vehicle, and the second detection module 50 can detect the open and closed state of the tailgate (that is, the second detection module 50 can detect whether the tailgate is in the opened state or the closed state). The control module 30 communicates with the first detection module 10; the control module 30 communicates with the determining module 20; and the control module 30 communicates with the second detection module 50. The first detection module 10 and the second detection module 50 can send the detection information to the control module 30, and the determining module 20 can send the determining information to the control module 30. The control module 30 is configured for controlling the projection light 40 to project the first step area when the distance between the user and the tailgate reaches the preset distance range value and the key matches the vehicle, and for controlling the vehicle to open the tailgate when the user is located in the first step area and the tailgate is closed; or for controlling the vehicle to close the tailgate when the user is located in the first step area and the tailgate is opened. The control module 30 can control the projection light 40 to project the first step area and control the tailgate of the vehicle to move according to the information sent by the first detection module 10, the second detection module 50 and the determining module 20.

The first detection module 10 can include induction radars 11, and the number of induction radars 11 can be set to multiple, for example, the number of induction radars 11 can be set to two, and the two induction radars 11 can be set on the rear bumper of the vehicle, and the induction radars 11 can detect whether the distance between the user and the tailgate reaches the preset distance range value. When the induction radars 11 detect that the distance between the user and the tailgate reaches the preset distance range value, the induction radars 11 can wake up the determining module 20.

Optionally, the induction radars 11 can directly wake up the determining module 20, and the induction radars 11 can also wake up the determining module 20 through the control module 30. Optionally, the determining module 20 can include the PEPS (Passive-Entry-Passive-Start) controller 21. When the determining module 20 is awakened, the determining module 20 can receive the authentication information sent by the key. The key can send the authentication information in real time, or the key can also send the authentication information at a certain interval. The determining module 20 can receive the authentication information sent by the key, and the determining module 20 can authenticate the received authentication information to determine whether the key matches the vehicle. If the determining module 20 determines that the key matches the vehicle, the determining module 20 can send the information that the key matches the vehicle to the control module 30.

In addition, the first detection module 10 can detect whether the user is located in the first step area projected by the projection light 40. If the first detection module 10 detects that the user is located in the first step area projected by the projection light 40, the first detection module 10 can send the information of the user in the first step area projected by the projection light 40 to the control module 30. The control module 30 can control the tailgate of the vehicle to move according to the matching information of the key and the vehicle, the opening and closing states of the tailgate, and the information of the user in the first step area projected by the projection light 40.

Specifically, if the tailgate is in the closed state at this time, the control module 30 can control the tailgate of the vehicle to be opened; if the tailgate is in the opened state at this time, the control module 30 can control the tailgate of the vehicle to be closed.

Optionally, the second detection module 50 can be arranged separately, or the second detection module 50 can be integrated into the vehicle controller. The control module 30 can include the first control module 31 and the second control module 32, the first control module 31 and the second control module 32 can be arranged separately, the first control module 31 and the second control module 32 can also be integrated with the vehicle controller. The first control module 31 can communicate with the first detection module 10, the determining module 20 and the second detection module 50. The second control module 32 can be configured for controlling the tailgate of the vehicle to move. Optionally, the second control module 32 can be constructed as a tailgate controller, which can be used to control the opening and closing of the tailgate of the vehicle.

Optionally, the tailgate controller can control the tailgate to be unlocked, and after the tailgate controller controls the tailgate to be unlocked, the tailgate controller can control the lever motor operation to drive the electric lever to move to open the tailgate of the vehicle, and the tailgate controller can also control the tailgate to be closed.

In the existing technology, there are two ways to control the tailgate of the vehicle to move. One way is to control the tailgate of the vehicle to move by pressing the switch button of the tailgate of the vehicle, and when the user is carrying items in his hand, this way of controlling the tailgate of the vehicle will lead to inconvenient operation for the user. Another way is to raise the foot under the tailgate of the vehicle to trigger the sensor to control the tailgate of the vehicle to move, and when the user is carrying heavy objects or the ground is icy, this way of controlling the tailgate of the vehicle may cause the user to slip, which may cause the user to fall.

In the present application, the device 100 for controlling the tailgate of the vehicle is provided in the present application, when the key matches the vehicle and the user is located in the first step area projected by the projection light 40, the control module 30 can control the tailgate of the vehicle to move, so that the user does not need to press the button to control the tailgate of the vehicle to move. It also does not require the user to lift the foot to trigger the sensor to control the tailgate of the vehicle to move, so that it can easily open and close the tailgate of the vehicle, which will not cause the user to slip and will not cause the user to fall.

Therefore, the device 100 for controlling the tailgate of the vehicle provided in the present application does not require the user to press the button to control the tailgate of the vehicle to move, so that the tailgate of the vehicle can be conveniently opened and closed, and the safety of opening and closing the tailgate of the vehicle can be ensured without causing the user to slip or fall.

In some embodiments of the present application, after the key carried by the user is authenticated to determine that the key matches the vehicle, the control module 30 can control the projection light 40 to project the first step area, and the first detection module 10 can also be used to detect whether the user is located in the first step area. Further to detect whether the user is located in a sub-step area within the first step area, and if so, the control module 30 can control the vehicle to open or close the tailgate.

It should be noted that if the determining module 20 determines that the key carried by the user matches the vehicle, the determining module 20 can send the matching information of the key and the vehicle to the control module 30. When the control module 30 receives the matching information of the key and the vehicle, the control module 30 can control the projection light 40 to project the first step area. The projection light 40 can be constructed as an LED light, optionally, the projection light 40 can be set on the rear bumper of the vehicle, optionally, the users can set the pattern projected by the projection light 40 according to their preferences.

The first detection module 10 can detect whether the user is located in the first step area, and the first detection module 10 can detect whether the user is in the sub-step area within the first step area. If the user is in the sub-step area, the control module 30 can control the vehicle to open the tailgate or close the tailgate. Thus, the position of the step area can be indicated to the user, so as to facilitate the user to open or close the tailgate through the step action. Moreover, when the user is located in the sub-step area, the control module 30 will control the tailgate of the vehicle to move, which can improve the reliability of the control device 100. Users can set the pattern projected by the projection light 40 according to their preferences, which can improve the using experience and improve the exquisite sense of the vehicle.

It is understood that the sub-step area is within the scope of the first step area, and that the area of the sub-step area is smaller than the area of the first step area.

In some embodiments of the present application, after the key carried by the user is authenticated to determine that the key matches the vehicle, the control module 30 can control the projection light 40 to project the first step area, and the first detection module 10 is also configured for further detecting the distance variation trend between the user and the tailgate after detecting that the user is located in the first step area. The first detection module 10 is also configured for detecting whether the distance between the user and the tailgate has changed, and if so, the control module 30 can control the vehicle to open or close the tailgate.

It is understood that the first detection module 10 can detect whether the user is located in the first step area, and the first detection module 10 can detect whether the distance between the user and the tailgate has changed, for example, the first detection module 10 can detect whether the user is gradually approaching the tailgate. If the first detection module 10 detects that the user is located in the first step area and the distance between the user and the tailgate changes, the control module 30 can control the vehicle to open the tailgate or control the vehicle to close the tailgate. Therefore, when the user is located in the first step area and the distance between the user and the tailgate changes, the control module 30 will control the tailgate of the vehicle to move, thereby improving the reliability of the control device 100.

In some embodiments of the present application, after the first detection module 10 detects that the user is located in the first step area, the control module 30 is also configured for controlling the opening or closing of the tailgate after the projection light 40 flashes for a predetermined time.

It should be explained that the first detection module 10 can detect whether the user is located in the first step area. After the first detection module 10 detects that the user is located in the first step area, the control module 30 can control the projection light 40 to flash. Specifically, the control module 30 can control the projection light 40 to flash at a predetermined time. The users can set the predetermined time according to their preferences, for example, the predetermined time can be set to two seconds, after the projection light 40 flashes the predetermined time, the control module 30 can control the opening or closing of the tailgate.

Therefore, by controlling the predetermined time for the projection light 40 to flash, the user can be reminded that the tailgate is about to open or close, and the vehicle can have a certain interaction with the user, so as to enhance the intelligent level of the vehicle and further improve the using experience.

In some embodiments of the present application, if the first detection module 10 detects that the user is located within the movement path of the tailgate during the movement of the tailgate, the control module 30 can control the tailgate to stop moving, or the control module 30 can control the tailgate to move away from the user.

It should be understood that during the movement of the tailgate (for example, when the tailgate is opening or closing), the first detection module 10 can detect whether the user is located within the movement path of the tailgate. If the first detection module 10 detects that the user is located within the movement path of the tailgate, the control module 30 can control the tailgate to stop moving, or the control module 30 can control the tailgate to move away from the user.

Specifically, in the process of opening the tailgate, if the first detection module 10 detects that the user is located within the movement path of the tailgate, the control module 30 can control the tailgate to stop moving, or the control module 30 can control the tailgate to move away from the user (that is, control the tailgate to move towards the closed position), so as to avoid the tailgate hitting the user.

In the process of closing the tailgate, if the first detection module 10 detects that the user is located within the movement path of the tailgate, the control module 30 can control the tailgate to stop moving, or the control module 30 can control the tailgate to move away from the user (that is, control the tailgate to move towards the opened position), so as to avoid the tailgate clamping the user.

In some embodiments of the present application, during the process of closing the tailgate, the second detection module 50 further detects the motor operating parameters of the tailgate, the motor drives the tailgate to open or close, and the control module 30 controls the tailgate to stop moving or to move towards the opened position when the control module 30 determines that the tailgate is clamped according to the motor operating parameters, so as to avoid the phenomenon of the tailgate clamping the user.

Thus, the phenomenon of the tailgate hitting the user can be avoided, and the phenomenon of the tailgate clamping the user can be avoided, so as to ensure the safety of the control device 100.

As some embodiments of the present application, the control module 30 can control the tailgate to open if the tailgate clamps the user or the item. It should be noted that the control module 30 can monitor the current and Hall signal of the lever motor. If the current of the lever motor increases and the Hall signal stops output, it indicates that the tailgate is clamping the user or the item. At this time, the control module 30 can control the tailgate to open to avoid the user or the item being pinched by the tailgate. Thus, when the tailgate clamps the user or the item, the tailgate can be quickly controlled to open, so as to avoid the tailgate clamping the user or the item, which can further ensure the safety of the control device 100.

As some embodiments of the present application, the preset distance range value can be 500mm-600mm. It should be noted that the first detection module 10 can detect whether the distance between the user and the tailgate reaches the preset distance range value. Optionally, the first detection module 10 can detect the sector area behind the tailgate of the vehicle. Optionally, the preset distance range value can be the radius of the sector area behind the tailgate of the vehicle. That is, the radius of the sector area can be any value between 500mm-600mm, so that the value of the preset distance range can be reasonable, so that the reliability of the control device 100 can be improved.

FIG. 1 is the flow chart of the control method for the tailgate of the vehicle according to the embodiment of the present application. The control device for the tailgate of the vehicle in the above embodiments can realize the control method for the tailgate of the vehicle, as shown in FIG. 1. The control method for the tailgate of the vehicle includes the following steps:
In step S1, detecting whether a distance between a user and the tailgate reaches a preset distance range value. It needs to be explained that the control device for the tailgate of the vehicle includes a first detection module, a determining module and a control module, and the control device is the above-mentioned control device. It should be noted that the first detection module can be arranged at the tailgate, optionally, the first detection module can be arranged on the rear bumper of the vehicle, the first detection module can detect the distance between the user and the tailgate, specifically, the first detection module can detect whether the distance between the user and the tailgate reaches the preset distance range value.
In step S2, authenticating a key carried by the user to determine whether the key matches the vehicle. It needs to be explained that the determining module can authenticate the key carried by the user, in which the key can be the key of the vehicle, and the determining module can determine whether the key matches the vehicle.
In step S3,if the key matches the vehicle, controlling a projection light to project a first step area. It should be noted that if the determining module determines that the key matches the vehicle, the control module can control the projection light to project the first step area.
In step S4, detecting whether the user is located in the first step area, and detecting whether the tailgate is in a closed state or an opened state. It should be explained that the first detection module can also detect whether the user is located in the first step area projected by the projection light. The second detection module can detect the open and closed state of the tailgate (that is, the second detection module can detect whether the tailgate is in the closed state or the opened state).
In step S5, controlling the vehicle to open the tailgate if the user is located in the first step area and the tailgate is in the closed state; or controlling the vehicle to close the tailgate if the user is located in the first step area and the tailgate is in the opened state. It should be noted that the control module communicates with the first detection module, the control module communicates with the determining module, and the control module communicates with the second detection module. The first detection module and the second detection module can send the detection information to the control module, the first detection module and the second detection module can send the detection information to the control module, and the determining module can send the determining information to the control module. The control module can control the projection light to project the first step area and control the tailgate of the vehicle to move according to the information sent by the first detection module, the second detection module and the determining module.

The first detection module can include induction radars, and the number of induction radars can be set to multiple, for example, the number of induction radars can be set to two, and the two induction radars can be set on the rear bumper of the vehicle, and the induction radars can detect whether the distance between the user and the tailgate reaches the preset distance range value. When the induction radars detect that the distance between the user and the tailgate reaches the preset distance range value, the induction radars can wake up the determining module.

Optionally, the induction radars can directly wake up the determining module, and the induction radars 11 can also wake up the determining module through the control module. Optionally, the determining module can include the PEPS (Passive-Entry-Passive-Start) controller. When the determining module is awakened, the determining module can receive the authentication information sent by the key. The key can send the authentication information in real time, or the key can also send the authentication information at a certain interval. The determining module can receive the authentication information sent by the key, and the determining module can authenticate the received authentication information to determine whether the key matches the vehicle. If the determining module determines that the key matches the vehicle, the determining module can send the information that the key matches the vehicle to the control module.

In addition, the first detection module can detect whether the user is located in the first step area projected by the projection light. If the first detection module detects that the user is located in the first step area projected by the projection light, the first detection module can send the information of the user in the first step area projected by the projection light to the control module. The control module can control the tailgate of the vehicle to move according to the matching information of the key and the vehicle, the opening and closing states of the tailgate, and the information of the user in the first step area projected by the projection light.

Specifically, if the tailgate is in the closed state at this time, the control module can control the tailgate of the vehicle to be opened; if the tailgate is in the opened state at this time, the control module can control the tailgate of the vehicle to be closed.

Optionally, the second detection module can be arranged separately, or the second detection module can be integrated into the vehicle controller. The control module can include the first control module and the second control module, the first control module and the second control module can be arranged separately, the first control module and the second control module can also be integrated with the vehicle controller. The first control module can communicate with the first detection module, the determining module and the second detection module. The second control module can be configured for controlling the tailgate of the vehicle to move. Optionally, the second control module can be constructed as a tailgate controller, which can be used to control the opening and closing of the tailgate of the vehicle.

Optionally, the tailgate controller can control the tailgate to be unlocked, and after the tailgate controller controls the tailgate to be unlocked, the tailgate controller can control the lever motor operation to drive the electric lever to move to open the tailgate of the vehicle, and the tailgate controller can also control the tailgate to be closed.

In the existing technology, there are two ways to control the tailgate of the vehicle to move. One way is to control the tailgate of the vehicle to move by pressing the switch button of the tailgate of the vehicle, and when the user is carrying items in his hand, this way of controlling the tailgate of the vehicle will lead to inconvenient operation for the user. Another way is to raise the foot under the tailgate of the vehicle to trigger the sensor to control the tailgate of the vehicle to move, and when the user is carrying heavy objects or the ground is icy, this way of controlling the tailgate of the vehicle may cause the user to slip, which may cause the user to fall.

In the present application, the control method for the tailgate of the vehicle is provided in the present application, when the key matches the vehicle and the user is located in the first step area projected by the projection light, the control module can control the tailgate of the vehicle to move, so that the user does not need to press the button to control the tailgate of the vehicle to move. It also does not require the user to lift the foot to trigger the sensor to control the tailgate of the vehicle to move, so that it can easily open and close the tailgate of the vehicle, which will not cause the user to slip and will not cause the user to fall.

Therefore, the control method for the tailgate of the vehicle provided in the present application does not require the user to press the button to control the tailgate of the vehicle to move, so that the tailgate of the vehicle can be conveniently opened and closed, and the safety of opening and closing the tailgate of the vehicle can be ensured without causing the user to slip or fall.

In some embodiments of the present application, the step of detecting whether the user is located in the first step area can include: detecting whether the user is located in the first step area, and further detecting whether the user is in a sub-step area within the first step area, and if so, controlling the vehicle to open or close the tailgate. Further, after detecting that the user is located in the first step area, further detecting whether the user is in the sub-step area within the first step area.

It should be noted that if the determining module determines that the key carried by the user matches the vehicle, the determining module can send the matching information of the key and the vehicle to the control module. When the control module receives the matching information of the key and the vehicle, the control module can control the projection light to project the first step area. The projection light can be constructed as an LED light, optionally, the projection light can be set on the rear bumper of the vehicle, optionally, the users can set the pattern projected by the projection light according to their preferences.

The first detection module can detect whether the user is located in the first step area, and the first detection module can detect whether the user is in the sub-step area within the first step area. If the user is in the sub-step area, the control module can control the vehicle to open the tailgate or close the tailgate. Thus, the position of the step area can be indicated to the user, so as to facilitate the user to open or close the tailgate through the step action. Moreover, when the user is located in the sub-step area, the control module will control the tailgate of the vehicle to move, which can improve the reliability of the control method. Users can set the pattern projected by the projection light according to their preferences, which can improve the using experience and improve the exquisite sense of the vehicle.

It is understood that the sub-step area is within the scope of the first step area, and that the area of the sub-step area is smaller than the area of the first step area.

In some embodiments of the present application, the step of detecting whether the user is located in the first step area can include detecting whether the user is located in the first step area and detecting whether the distance between the user and the tailgate has changed and, if so, controlling the vehicle to open or close the tailgate. Further, after detecting that the user is located in the first step area, the distance variation trend between the user and the tailgate is further detected.

It is understood that the first detection module can detect whether the user is located in the first step area, and the first detection module can detect whether the distance between the user and the tailgate has changed, for example, the first detection module can detect whether the user is gradually approaching the tailgate. If the first detection module detects that the user is located in the first step area and the distance between the user and the tailgate changes, the control module can control the vehicle to open the tailgate or control the vehicle to close the tailgate. Therefore, when the user is located in the first step area and the distance between the user and the tailgate changes, the control module will control the tailgate of the vehicle to move, thereby improving the reliability of the control method.

In some embodiments of the present application, after detecting that the user is within the first step area, the control method can further include controlling the tailgate to be opened or closed after controlling the projection light to flash for a predetermined time.

It should be explained that the first detection module can detect whether the user is located in the first step area. After the first detection module detects that the user is located in the first step area, the control module can control the projection light to flash. Specifically, the control module can control the projection light to flash at a predetermined time. The users can set the predetermined time according to their preferences, for example, the predetermined time can be set to two seconds, after the projection light flashes the predetermined time, the control module can control the opening or closing of the tailgate.

Therefore, by controlling the predetermined time for the projection light to flash, the user can be reminded that the tailgate is about to open or close, and the vehicle can have a certain interaction with the user, so as to enhance the intelligent level of the vehicle and further improve the using experience.

In some embodiments of the present application, if it detects that the user is located within the movement path of the tailgate during the movement of the tailgate, the tailgate can be controlled to stop moving, or to move away from the user.

It should be understood that during the movement of the tailgate (for example, when the tailgate is opening or closing), the first detection module can detect whether the user is located within the movement path of the tailgate. If the first detection module detects that the user is located within the movement path of the tailgate, the control module can control the tailgate to stop moving, or the control module can control the tailgate to move away from the user.

Specifically, in the process of opening the tailgate, if the first detection module detects that the user is located within the movement path of the tailgate, the control module can control the tailgate to stop moving, or the control module can control the tailgate to move away from the user (that is, control the tailgate to move towards the closed position), so as to avoid the tailgate hitting the user.

In the process of closing the tailgate, if the first detection module detects that the user is located within the movement path of the tailgate, the control module can control the tailgate to stop moving, or the control module can control the tailgate to move away from the user (that is, control the tailgate to move towards the opened position), so as to avoid the tailgate clamping the user.

In some embodiments of the present application, during the process of closing the tailgate, the second detection module further detects the motor operating parameters of the tailgate, the motor drives the tailgate to open or close, and the control module controls the tailgate to stop moving or to move towards the opened position when the control module determines that the tailgate is clamped according to the motor operating parameters, so as to avoid the phenomenon of the tailgate clamping the user.

Thus, the phenomenon of the tailgate hitting the user can be avoided, and the phenomenon of the tailgate clamping the user can be avoided, so as to ensure the safety of the control method.

As some embodiments of the present application, the control module can control the tailgate to open if the tailgate clamps the user or the item. It should be noted that the control module 30 can monitor the current and Hall signal of the lever motor. If the current of the lever motor increases and the Hall signal stops output, it indicates that the tailgate is clamping the user or the item. At this time, the control module can control the tailgate to open to avoid the user or the item being pinched by the tailgate. Thus, when the tailgate clamps the user or the item, the tailgate can be quickly controlled to open, so as to avoid the tailgate clamping the user or the item, which can further ensure the safety of the control method.

As some embodiments of the present application, the preset distance range value can be 500mm-600mm. It should be noted that the first detection module can detect whether the distance between the user and the tailgate reaches the preset distance range value. Optionally, the first detection module can detect the sector area behind the tailgate of the vehicle. Optionally, the preset distance range value can be the radius of the sector area behind the tailgate of the vehicle. That is, the radius of the sector area can be any value between 500mm-600mm, so that the value of the preset distance range can be reasonable, so that the reliability of the control method can be improved.

The vehicle according to the embodiment of the present application includes a vehicle controller, the vehicle controller is used to perform the steps of the control method for the tailgate of the vehicle in the above embodiments, the control method for the tailgate of the vehicle can be applied to the vehicle, through the control method for the tailgate of the vehicle in the present application, when the vehicle controller performs the steps of the control method for the tailgate of the vehicle in the above embodiment, which does not require the user to press the button to control the tailgate of the vehicle to move, so that the tailgate of the vehicle can be conveniently opened and closed, and the safety of opening and closing the tailgate of the vehicle can be ensured without causing the user to slip or fall.

According to the computer readable storage medium of the embodiment of the present application, the control program of the tailgate of the vehicle is stored in the computer readable storage medium, and the control method for the tailgate of the vehicle is realized when the control program of the tailgate of the vehicle is executed by the processor. When the control program of the tailgate of the vehicle is executed by the processor, the user does not require the user to press the button to control the tailgate of the vehicle to move, so that the tailgate of the vehicle can be conveniently opened and closed, and the safety of opening and closing the tailgate of the vehicle can be ensured without causing the user to slip or fall.

According to the vehicle controller of the embodiment of the present application, the vehicle controller includes a memory, a processor, and a control program of the tailgate of the vehicle stored on the memory and running on the processor. When the processor executes the control program of the tailgate of the vehicle, the control method for the tailgate of the vehicle in the above embodiment is realized. When the processor executes the control program of the tailgate of the vehicle, the user does not require the user to press the button to control the tailgate of the vehicle to move, so that the tailgate of the vehicle can be conveniently opened and closed, and the safety of opening and closing the tailgate of the vehicle can be ensured without causing the user to slip or fall.

The vehicle controller includes at least one processor, at least one communication interface, at least one memory, and at least one communication bus; in the embodiment of the present application, the number of processors, communication interfaces, memory, and communication buses is at least one, and the processor, the communication interface, and the memory communicate with each other through the communication bus.

Where the memory can be, but is not limited to, a Random Access Memory (RAM), a Read Only Memory (ROM), a Programmable Read-Only Memory (PROM), an Erasable Programmable Read-Only Memory (EPROM), an Electric Erasable Programmable Read-Only Memory (EEPROM), etc. The memory is used to store the program, and the processor executes the program after receiving the execution instruction to realize the steps of the control method for the tailgate of the vehicle described in the above embodiment.

The processor can be an integrated circuit chip that has the ability to process signals. The above processor can be a general-purpose processor, which includes a Central Processing Unit (CPU) and Network Processor (NP), and can also be a digital signal processor (DSP), an application-specific integrated circuits (ASIC), a field programmable gate array (FPGA) or other programmable logic devices, discrete gate or transistor logic devices, and discrete hardware components. The methods, steps and logic block diagrams disclosed in embodiments of the present application can be realized or executed. The general-purpose processor can be a microprocessor or the processor can be any conventional processor, etc.

It should be noted that logic and/or steps expressed in a flowchart or otherwise described herein, for example, can be thought of as a fixed sequence of executable instructions for performing a logical function, which can be concretely implemented in any computer-readable medium. For use by, or in combination with, an instruction executing system, device or apparatus (such as a computer-based system, a system including a processor, or other system that can take instructions from and execute instructions from an instruction executing system, device or apparatus). For the purposes of this specification, "computer readable medium" can be any device that can contain, store, communicate, transmit or transmit programs for use by or in conjunction with an instruction executing system, device or apparatus. More specific examples of computer readable medium (non-exhaustive list) include the following: an electrical connection portion (electronic device) having one or more wiring, a portable computer cartridge (magnetic device), a random access memory (RAM), a read-only memory (ROM), an erasable and editable read-only memory (EPROM or flash memory), an optical fiber device, and a portable optical disc read-only memory (CDROM). In addition, the computer-readable medium can even be paper or other suitable medium on which the program can be printed, since the program can be obtained electronically, for example, by optical scanning of the paper or other medium, followed by editing, interpreting or, if necessary, processing in other suitable ways, and then stored in a computer memory.

It is to be understood that components of the present application can be implemented with a hardware, a software, a firmware, or a combination thereof. In the above embodiments, multiple steps or methods can be implemented with the software or the firmware stored in memory and executed by a suitable instruction execution system. For example, if implemented in hardware, as in another embodiment, it may be implemented using any of the following technologies known in the domain, or a combination thereof: a discrete logic circuit with a logic gate for implementing logic functions on data signals, an application-specific integrated circuit with a suitable combinational logic gate, a programmable gate array (PGA), and a field programmable gate arrays (FPGA), etc.

The aforementioned embodiments are only preferred embodiments of the present application, and should not be regarded as being limitation to the present application. Any modification, equivalent replacement, improvement, and so on, which are made within the spirit and the principle of the present application, should be included in the protection scope of the present application.

In the description of this specification, the reference terms "an embodiment", "some embodiments", "an illustrative embodiment", "an example", "a specific example", or "some examples", etc, are used to refer to specific features, structures, materials or features incorporated in the embodiment or description of the example contained in at least one embodiment or example of the present application. In this specification, schematic representations of the above terms do not necessarily refer to identical embodiments or examples. Further, the specific features, structures, materials or features described can be combined in a suitable manner in any one or more embodiments or examples.

Notwithstanding that embodiments of the present application have been shown and described, those skilled in the art can understand that many variations, modifications, substitutions and variants of these embodiments can be made without deviating from the principles and purposes of the present application, and that the scope of the present application is limited by the claims and their equivalents.

## Claims

1. A control method for a tailgate of a vehicle, comprising the following steps:
detecting whether a distance between a user and the tailgate reaches a preset distance range value;
authenticating a key carried by the user to determine whether the key matches the vehicle;
if the key matches the vehicle, controlling a projection light to project a first step area;
detecting whether the user is located in the first step area, and detecting whether the tailgate is in a closed state or an opened state;
controlling the vehicle to open the tailgate if the user is located in the first step area and the tailgate is in the closed state; or
controlling the vehicle to close the tailgate if the user is located in the first step area and the tailgate is in the opened state.

2. The control method for the tailgate of the vehicle according to claim 1, wherein the step of detecting whether the distance between the user and the tailgate reaches the preset distance range value comprises:
after detecting that the user is located in the first step area, further detecting whether the user is in a sub-step area within the first step area.

3. The control method for the tailgate of the vehicle according to claim 1, wherein the step of detecting whether the distance between the user and the tailgate reaches the preset distance range value comprises:
after detecting that the user is located in the first step area, further detecting a distance variation trend between the user and the tailgate.

4. The control method for the tailgate of the vehicle according to any one of claims 1 to 3, wherein after the step of detecting that the user is located in the first step area, the control method further comprises:
controlling the projection light to flash for a predetermined time.

5. The control method for the tailgate of the vehicle according to any one of claims 1 to 4, wherein during a movement of the tailgate, controlling the tailgate to stop moving or to move in a direction away from the user if the user is detected to be located within a movement path of the tailgate.

6. The control method for the tailgate of the vehicle according to any one of claims 1 to 5, wherein the control method comprises further detecting motor working parameters of the tailgate during a closing process of the tailgate, and controlling the tailgate to stop moving or to move towards an opened position when the tailgate is determined to be clamped according to the motor working parameters.

7. A control device for a tailgate of a vehicle, comprising:
a first detection module, configured for detecting whether a distance between a user and the tailgate reaches a preset distance range value, and further configured for detecting whether the user is located in a first step area projected by a projection light;
a determining module, configured for authenticating a key carried by the user to determine whether the key matches the vehicle;
a second detection module, configured for detecting whether the tailgate is in a closed state or an opened state; and
a control module, communicated with the first detection module, the second detection module and the determining module, and configured for controlling the projection light to project the first step area when the distance between the user and the tailgate reaches the preset distance range value and the key matches the vehicle, and controlling the vehicle to open the tailgate when the user is located in the first step area and the tailgate is in the closed state; or controlling the vehicle to close the tailgate if the user is located in the first step area and the tailgate is in the opened state.

8. The control device for the tailgate of the vehicle according to claim 7, wherein the first detection module is further configured for after detecting that the user is located in the first step area, further detecting whether the user is in a sub-step area within the first step area.

9. The control device for the tailgate of the vehicle according to claim 7, wherein the first detection module is further configured for after detecting that the user is located in the first step area, further detecting a distance variation trend between the user and the tailgate.

10. The control device for the tailgate of the vehicle according to any one of claims 7 to 9, wherein after the first detection module detects that the user is located in the first step area, the control module is further configured for controlling to open or close the tailgate after the projection light is controlled to flash for a predetermined time.

11. The control device for the tailgate of the vehicle according to any one of claims 7 to 10, wherein during a movement of the tailgate, the control module controls the tailgate to stop moving or to move in a direction away from the user if the first detection module detects that the user is located within a movement path of the tailgate.

12. The control device for the tailgate of the vehicle according to any one of claims 7 to 11, wherein during a closing process of the tailgate, the second detection module further detects motor working parameters of the tailgate, the control module controls the tailgate to stop moving or to move towards an opened position when the tailgate is determined to be clamped according to the motor working parameters.

13. A vehicle, comprising a vehicle controller configured for executing steps of the control method for the tailgate of the vehicle according to any one of claims 1 to 6.

14. A computer-readable storage medium storing with a control program for a tailgate of a vehicle, which, executed by a processor, causes the processor to realize the control method for the tailgate of the vehicle according to any one of claims 1 to 6.

15. A vehicle controller, comprising: a memory, a processor, and a control program of a tailgate of vehicle stored on the memory and running on the processor; wherein when the control program for the tailgate of the vehicle is executed by a processor, the control program for the tailgate of the vehicle causes the processor realizes the control method for the tailgate of the vehicle according to any one of claims 1 to 6.
